Europäisches Patentamt
European Patent Office
Office européen des brevets

(19)

(11) Publication number : **0 486 284 A2**

(12) # EUROPEAN PATENT APPLICATION

(21) Application number : **91310480.8**

(51) Int. Cl.$^5$ : **G09G 3/36**

(22) Date of filing : **13.11.91**

(30) Priority : **13.11.90 JP 307555/90**
**13.11.90 JP 307556/90**
**13.11.90 JP 307557/90**
**26.11.90 JP 323694/90**
**10.12.90 JP 415720/90**

(43) Date of publication of application :
**20.05.92 Bulletin 92/21**

(84) Designated Contracting States :
**DE FR GB**

(71) Applicant : **SEL SEMICONDUCTOR ENERGY LABORATORY CO., LTD.**
**398 Hase**
**Atsugi-shi Kanagawa-ken 243 (JP)**

(72) Inventor : **Yamazaki, Shunpei**
**21-21 Kitakarasuyama, 7-chome**
**Setagaya-ky, Bokyo 157 (JP)**
Inventor : **Mase, Akira**
**Terasu Hase 3-3, 381-1, Hase**
**Atsugi-shi, Kanagawa-ken 243 (JP)**
Inventor : **Hiroki, Masaaki**
**533-13, Shirane**
**Isehara-shi, Kanagawa-ken 259-11 (JP)**

(74) Representative : **Milhench, Howard Leslie et al**
**R.G.C. Jenkins & Co. 26 Caxton Street**
**London SW1H 0RJ (GB)**

(54) **Electro-optical device and driving method for the same.**

(57) A display and a driving method for the same capable of constructing clear visual images is described. In the display, a plurality of conductive pads are opposed to a back electrode with a light influencing medium, such as a liquid crystal layer, disposed therebetween. Control signals are supplied to the conductive pads through complementary transistors comprising a p-channel field effect transistor and an n-channel field effect transistor connected between VDD and VSS lines of a control circuit, which also supplies a bias voltage to the back electrode and gate control signals to the gate terminals of the p-channel field effect transistor and the n-channel field effect transistor. During operation, the bias voltage is inverted in order to invert the polarity of control signals applied across the light influencing medium.

FIG. 3

46
52
VGG
52
VGG
VDD
48
40'
34a'
N
D
28'
51
34b'
29
42
S
S
37b
34b
41
49
P
28
VSS
40
D
34a
47
VDD
48
49
VSS



Jouve, 18, rue Saint-Denis, 75001 PARIS

## BACKGROUND OF THE INVENTION

### Field of the Invention

The present invention relates to a display and a driving system for the same and, more particularly though not exclusively to a display driving system utilizing complementary thin-film insulated-gate field effect transistors suitable for use in liquid crystal displays.

### Description of the Prior Art

Active liquid crystal displays which are driven by thin-film transistors (TFTs) are well known in the art. Displays of this type comprise visual panels and peripheral circuits for driving the panels. A peripheral circuit is formed by attaching a single crystalline chip containing integrated circuits to a glass substrate by tab-bonding or COG (chip on glass). A visual panel comprises a plurality of pixels, each pixel being provided with a driving TFT. The TFT is usually an n-channel FET formed within an amorphous or polycrystalline semiconductor film which is electrically coupled to a respective pixel.

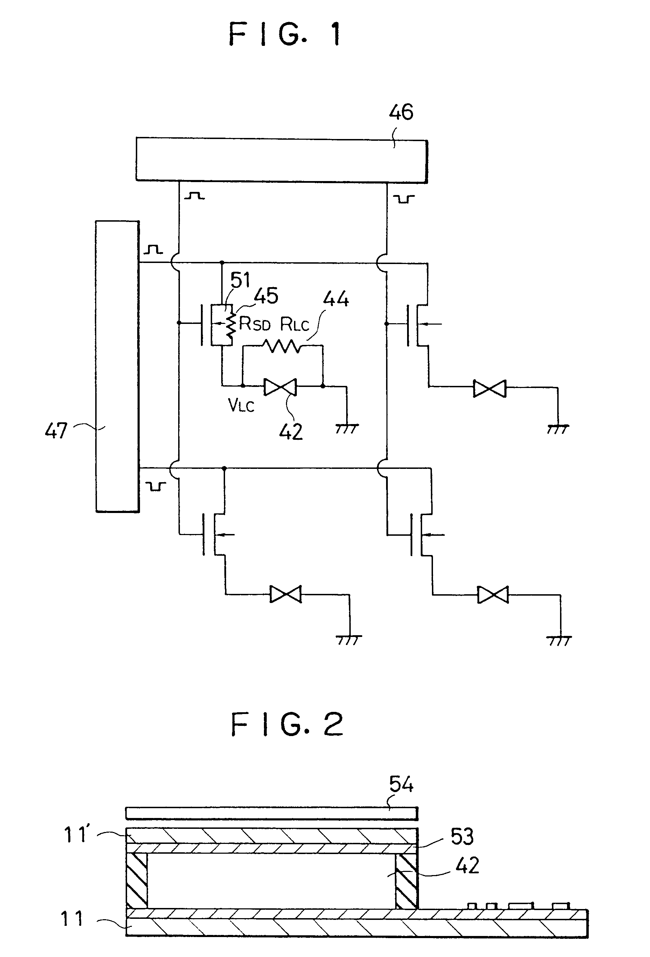

Fig. 1 is a diagram illustrating the equivalent circuit of an exemplary liquid crystal display. The diagram shows only a 2 x 2 matrix for the sake of convenience of description, whereas ordinary liquid crystal displays commonly consist of much greater numbers of pixels for example a 640 x 480 pixel matrix, a 1260 x 960 pixel matrix and so on. The liquid crystal display includes a liquid crystal layer 42 disposed between a pair of glass substrates 11 and 11′ as shown in Fig. 2. Numeral 54 designates a polarizing plate. The inner surface of the glass substrate 11′ is coated with a ground electrode 53. The inner surface of the other substrate 11 is provided with a plurality of conductive pads each constituting one pixel of the display. Each conductive pad is formed together with an N-type FET 51 whose source is electrically connected to the corresponding pad. The drains of all the FETs in the same row of the matrix are connected to a common control line for the row to which control signals are supplied from a row driver 47. The gates of all the N-type FETs in the same column are connected to a common control line for the column to which control signals are supplied from a column driver 46.

In operation of the thus described display, the column driver 46 supplies control signals of a high voltage level to selected columns to turn on the TFTs of those columns. There are, however, undesirable cases in which the switching action of the TFTs cannot sufficiently be carried out so that the output voltage of the TFT (i.e. the input to the pixel) does not reach a predetermined high voltage level (e.g. 5V), or the output voltage does not drop sufficiently to reach a predetermined low voltage level (e.g. 0V). This is because of the asymmetrical characteristics of the TFTs. Namely, the charging action on the liquid crystal layer takes place in a dissimilar manner to the discharging action therefrom. Furthermore, since the liquid crystal layer is intrinsically insulating, the liquid crystal voltage (VLC) floats when the TFT is turned off. The amount of electric charge accumulated on the liquid crystal layer, which is equivalent to a capacitance, determines the VLC. The accumulated charge, however, will leak through a channel resistance RSD which may be formed by dust or ionized impurities or through the liquid crystal itself whose resistance RLC 44 may occasionally be reduced. For this reason, VLC sometimes becomes an indeterminate intermediate voltage level. In the case of a display panel having from, say, two hundred thousand to 5 million pixels, a high yield cannot be expected in such a situation.

Furthermore, in conventional driving methods, the liquid crystal material to which control voltages are applied is subjected to an average electric field in one direction during operation. The electric field tends to cause electrolysis when continuously used. Because of this, the aging of the liquid crystal material is accelerated and the working life of the display is reduced.

## OBJECTS AND SUMMARY OF THE INVENTION

It is an object of the present invention to provide a display and a driving method for the same which is capable of demonstrating clear visual images.

It is another object of the present invention to provide a display and a driving method for the same which is capable of accurate operation.

To achieve the foregoing and other objects, the present invention in one of its aspects provides a display which comprises a light influencing medium, electrodes defining a plurality of pixels in the medium, and a control circuit for supplying control signals to the electrodes, the control circuit supplying the control signal to each pixel through a switching element which comprises at least one complementary transistor pair connected between a low voltage level and a high voltage level. By use of complementary transistors, the voltage level of each pixel during its operation can be prevented from fluctuating.

In typical driving methods, a display of this type is driven by applying control signals in the form of pulses to conductive pads. The light influencing medium is disposed between the conductive pads and a back electrode. The back electrode is supplied with an alternating voltage in order to make the average voltage applied to the light influencing medium equal to zero volts.

In a typical example, the present invention is applied to the field of the liquid crystal displays (LCDs) . Each pixel of the display is provided with a switching element comprising complementary thin-film field effect transistors which forcibly pull or push the voltage level of the liquid crystal layer to a definite high or low value rather than leaving it in a floating state. Of course, the present invention can also be implemented with a variety of other types of transistors, such as staggered types, coplanar types, inverted staggered types and inverted coplanar types. The channel regions of the transistors may be doped by the introduction of a suitable impurity which reduces the photosensitivity of the transistors, in order to eliminate the undesirable influence of incident light. When the control transistors of a driver for supplying control signals to the switching transistors are formed also on the same substrate at its peripheral position where no light is incident, they are not doped by the impurity. In such a case, two types of transistors are formed on the substrate, one being doped and the other not being doped and having a carrier mobility 2 to 4 times greater than that of the doped transistors.

The above and further features of the present invention are set forth with particularity in the appended claims and will become clear to those possessed of appropriate knowledge and skills from consideration of the following description given with reference to the accompanying drawings.

## BRIEF DESCRIPTION OF THE DRAWINGS

Fig. 1 is a schematic diagram showing the equivalent circuit of a prior art liquid crystal display;

Fig. 2 is a cross-sectional schematic view showing the general configuration of a prior art liquid crystal display;

Fig. 3 is a schematic diagram showing the equivalent circuit of a liquid crystal display in accordance with a first embodiment of the present invention;

Figs. 4(A), 4(B) and 4(C) are plan and cross-section schematic views showing the liquid crystal display illustrated in Fig. 3;

Figs. 5(A) and 5(B) are explanatory diagrams demonstrating operation of the liquid crystal display in accordance with the first embodiment;

Fig. 6 is a schematic view showing a system suitable for manufacturing thin-film field effect semiconductor transistors in accordance with the present invention;

Fig. 7(A) is a schematic view showing a planar type magnetron RF sputtering apparatus of the system illustrated in Fig. 6 suitable for use in depositing oxide and semiconductor films;

Fig. 7(B) is an explanatory diagram showing the arrangement of magnets provided in the apparatus illustrated in Fig. 7(A);

Figs. 8(A) to 8(F) are cross-sectional schematic views showing a method of manufacturing thin-film field effect semiconductor transistors suitable for the first embodiment of the present invention;

Fig. 9(A) is a schematic diagram showing the equivalent circuit of a liquid crystal display in accordance with a second embodiment of the present invention;

Fig. 9(B) is a schematic plan view showing the liquid crystal display illustrated in Fig. 9(A);

Fig. 10(A) is a schematic diagram showing the equivalent circuit of a liquid crystal display in accordance with a third embodiment of the present invention;

Fig. 10(B) is a schematic plan view showing the liquid crystal display illustrated in Fig. 10(A);

Fig. 11 is a schematic diagram showing the equivalent circuit of a liquid crystal display in accordance with a fourth embodiment of the present invention;

Fig. 12 is an explanatory diagram showing the signals involved in the operation of the complementary transistors of the liquid crystal display in accordance with the fourth embodiment;

Fig. 13 is a signal timing diagram demonstrating the operation of the liquid crystal display in accordance with the fourth embodiment of the present invention;

Fig. 14 is a schematic diagram showing the equivalent circuit of a liquid crystal display corresponding to Fig. 13 in accordance with the fourth embodiment of the present invention;

Fig. 15 is a schematic diagram showing the equivalent circuit of a liquid crystal display in accordance with a fifth embodiment of the present invention;

Fig. 16 is a signal timing diagram demonstrating the operation of the liquid crystal display in accordance with the fifth embodiment of the present invention;

Fig. 17 is a schematic diagram showing the equivalent circuit of a liquid crystal display in accordance with a sixth embodiment of the present invention; and

Fig. 18 is a signal timing diagram demonstrating operation of the liquid crystal display in accordance with the sixth embodiment of the present invention.

## DETAILED DESCRIPTION OF THE EMBODIMENTS

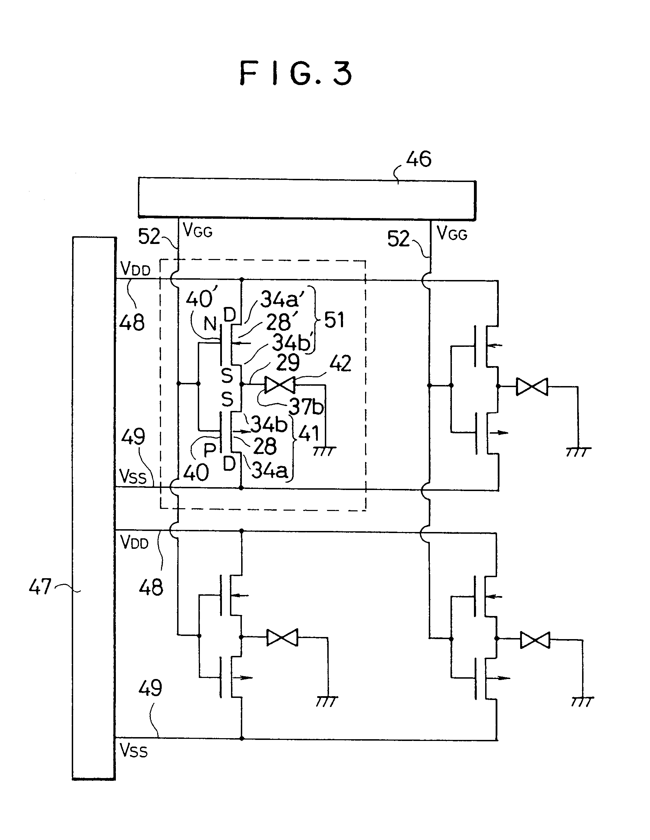

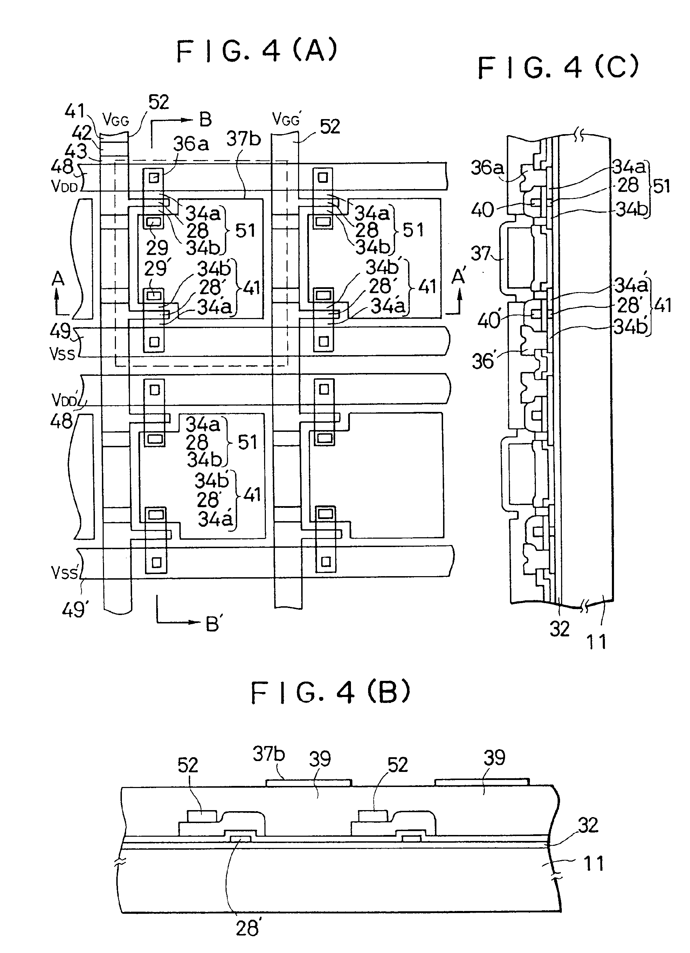

Fig. 3 is a diagram illustrating the equivalent circuit of a liquid crystal display in accordance with a first embodiment of the present invention. The diagram shows only a 2 x 2 matrix for the sake of convenience of description, whereas ordinary liquid crystal displays commonly consist of much greater numbers of pixels such as a 640 x 480 matrix or a 1260 x 960 matrix. The liquid crystal display includes a liquid crystal layer 42 disposed between a pair of glass substrates 11 and 11′ as shown in Fig. 2. The inner surface of the glass substrate 11′ is coated with an electrode 53. The inner surface of the other substrate 11 is provided with a plurality of conductive pads 37b each constituting one pixel of the display as seen from Fig. 4(A). The dashed line encloses one pixel in the figure. Each conductive pad 37b is formed on the substrate together with two CMOS transistors, namely an N-type FET 41 and a P-type FET 51, whose drains 34b′ and 34b are electrically connected with the corresponding pad 37b. The sources of all the P-type CMOS FETs on the same row are connected with a VDD line 48 of the row. The sources of all the N-type CMOS FETs on the same row are connected with a VSS line 49 of the row. The gates of all the P-type and N-type CMOS FETs on the same column are connected with a VGG line of the column. The VSS and VDD lines are connected to a row driver 47 and supplied with control signals therefrom. The VGG lines 52 are connected to a column driver 46 and supplied with control signals therefrom. The column driver 46 and the row driver 47 are formed on the projected end of the glass substrate 11 as will be understood from the illustration of Fig. 2.

When a TN liquid crystal material is used, the distance between the substrates is selected to be about 10 µm and both the inner surfaces of the substrates are provided with orientation control films which are given suitable rubbing treatment. When a ferroelectric liquid crystal (FLC) material is used, the distance between the substrates is selected to be about 1.5 to 3.5 µm, e.g. 2.3 µm, and only one of the inner surfaces (the surface of the ground electrode is provided with an orientation control film given suitable rubbing treatment. The driving voltage is ±20V. When a liquid crystal material of dispersion type or a polymer liquid crystal material is used, the distance between the substrates is selected to be about 1.0 to 10.0 µm, e.g. 2.3µm, and no orientation control film is necessary. The driving voltage is ±10 to ±15V. In this case, polarization plates are also unnecessary and therefore the amount of available light can be relatively increased in either transmission or reflective types of LCD. Accordingly, whereas the liquid crystal layer possesses no threshold voltage, a large contrast in displayed images may be realized and undesirable cross-talk may be effectively prevented by the use of complementary TFTs which provide a definite threshold voltage.

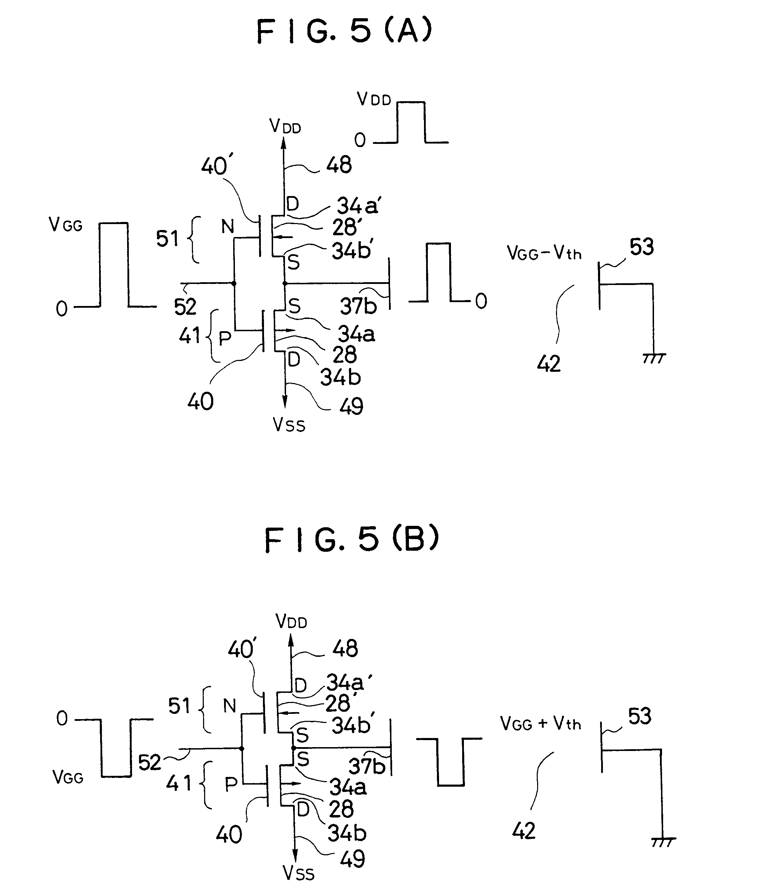

The operation of the complementary transistors will now be explained with reference to Figs. 5(A) and 5(B). When a control signal of a low voltage level (0V) is applied to the gates 28 and 28′, the p-channel TFT 41 is turned off while the n-channel TFT is turned on. The output terminal of the complementary TFTs 29 is disconnected from the VSS line and connected to the VDD line and therefore pulled up to a high voltage VDD (e.g. +10V) when a high voltage input signal is applied to the VDD line. Conversely, when a control signal of a high voltage level (5V) is supplied to the gates 28 and 28′ as shown in Fig.5 (B), the p-channel TFT 41 is turned on while the n-channel TFT 51 is turned off. The output terminal of the complementary TFTs 29 is disconnected from the VDD line and connected to the VSS line and therefore pushed down to a low voltage (e.g. -10V or 0V) when low voltage input signal is applied to the VSS line. In operation of the display, the column driver 46 supplies control signals of a low voltage level to selected columns to connect the VDD line 48 to the pads 37b on the columns and disconnect the VSS line 49 from the pads 37b on the columns. Conversely, the row driver 47 supplies control signals of a high voltage level to selected rows by means of the VDD line to pull up the voltage of the desired pads located on the selected columns and the selected rows at the same time. Therefore, in the LCD operation, the liquid crystal layer is selectively subjected to three voltage levels, i.e. -10V, 0V and +10V at the respective pixels to form an arbitrary visual pattern.

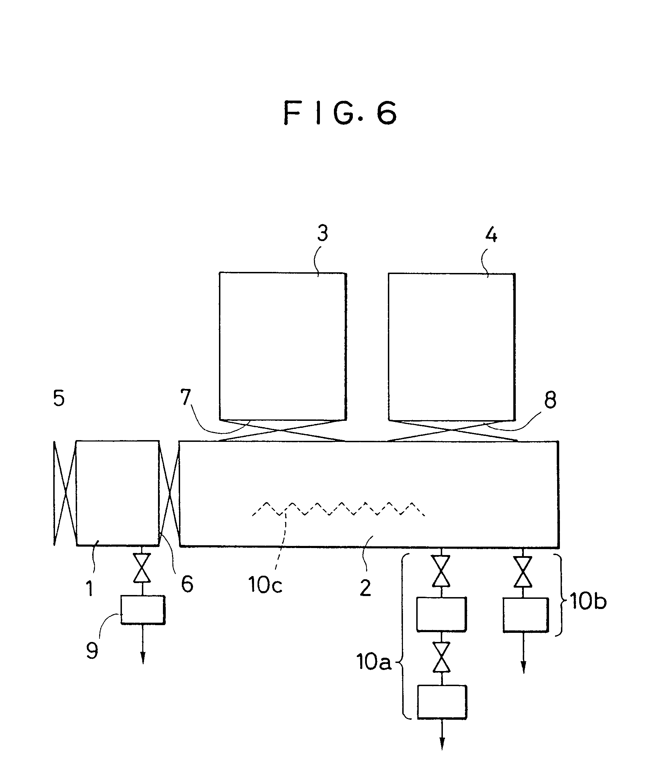

Referring now to Fig. 6, Figs. 7(A) and 7(B) and Figs. 8(A) to 8(F), a method of manufacturing CMOS insulated-gate field effect transistors 41 and 51 in accordance with a first embodiment of the present invention will now be explained. Fig. 6 is a schematic view showing a multi-chamber sputtering system for depositing semiconductor and oxide films by magnetron RF sputtering. The system comprises a loading and unloading chamber 1 provided with a gate valve 5, a subsidiary chamber 2 connected to the loading and unloading chamber 1 via a gate valve 6, and first and second individual sputtering apparatuses 3 and 4 respectively connected to the subsidiary chamber 2 through gate valves 7 and 8 respectively. The loading and unloading chamber 1 is provided with an evacuation system 9 comprising a rotary pump and a turbomolecular pump coupled in series. The subsidiary chamber 2 is provided with a first evacuation system 10a for roughing comprising a rotary pump and a turbomolecular pump in series, a second evacuation system 10b for high vacuum evacuation comprising a cryosorption pump, and a heather 10c located in the subsidiary chamber 2 in order to heat the substrates to be coated. If substrates to be coated are thermally stabilized in advance by being heated in the subsidiary chamber 2, their thermal distortion and stress caused in films during deposition can be reduced thereby improving the adhesion of the films to the substrates.

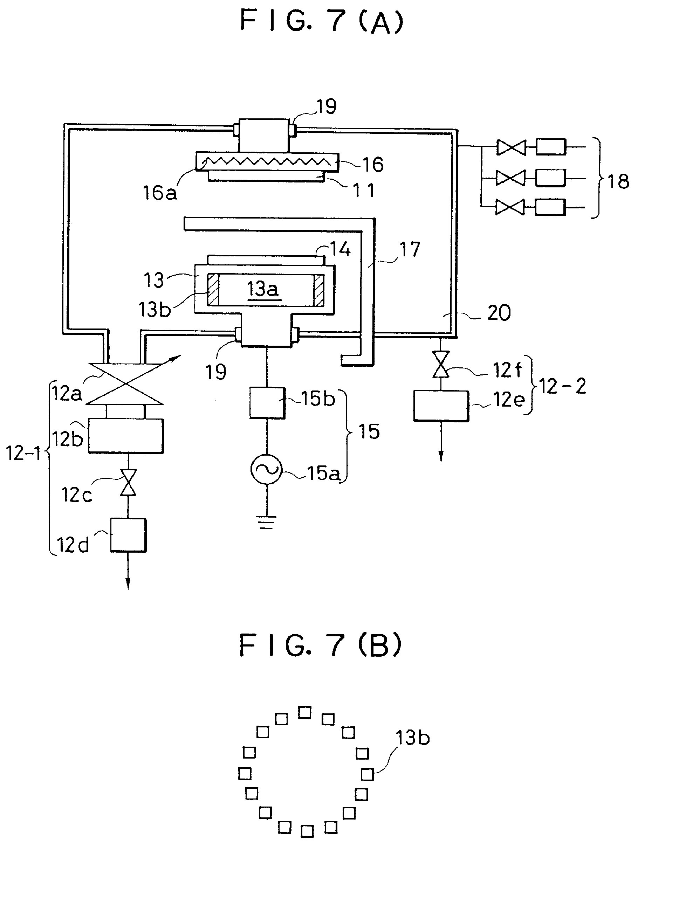

The sputtering apparatuses 3 and 4 are individual planar type magnetron RF sputtering apparatuses suitable for exclusive use in depositing oxide films and semiconductor films respectively when used in accordance with the present invention. Figs. 7(A) and 7(B) illustrate details of the RF sputtering apparatus. The apparatus comprises a vacuum chamber 20, a first evacuation system 12-1 for roughing consisting of a turbomolecular pump 12b and a rotary pump 12d provided with valves 12a and 12c respectively, a second evacuation system 12-2 for high vacuum evacuation comprising a cryosorption pump 12e provided with a valve 12f, a metallic holder 13 fixed in the lower section of the vacuum chamber 20 for supporting a target 14 thereon, the holder being formed with an inner conduit 13a through which a coolant can be caused to flow to cool the target 14 and being provided with a plurality of magnets 13b such as permanent magnets, an energy supply 15 consisting of an RF (e.g. 13.56 MHz) source 15a provided with a matching box 15b for supplying RF energy to the holder 13, a substrate holder 16 located in the upper section of the vacuum chamber 20 for supporting a substrate 11 to be coated, a heater 16a embedded in the substrate holder 16, a shutter system 17 located between the substrate 11 and the target 14, and a gas supply system 18. A sealing means 19 is also provided for ensuring that the vacuum chamber 20 remains airtight. In advance of actual deposition on the substrate 11, impurities occurring in the targets are sputtered out and deposited on the shutter 17 which is positioned between the substrate 11 and the target 14, and then the shutter is removed in order to enable normal deposition to be effected on the substrate 11. The magnets 13b are oriented with their N poles at their upper ends and their S poles at their lower ends and are horizontally arranged in a circle as illustrated in Fig. 7(B) in order to confine electrons within a sputtering region between the substrate 11 and the target 14.

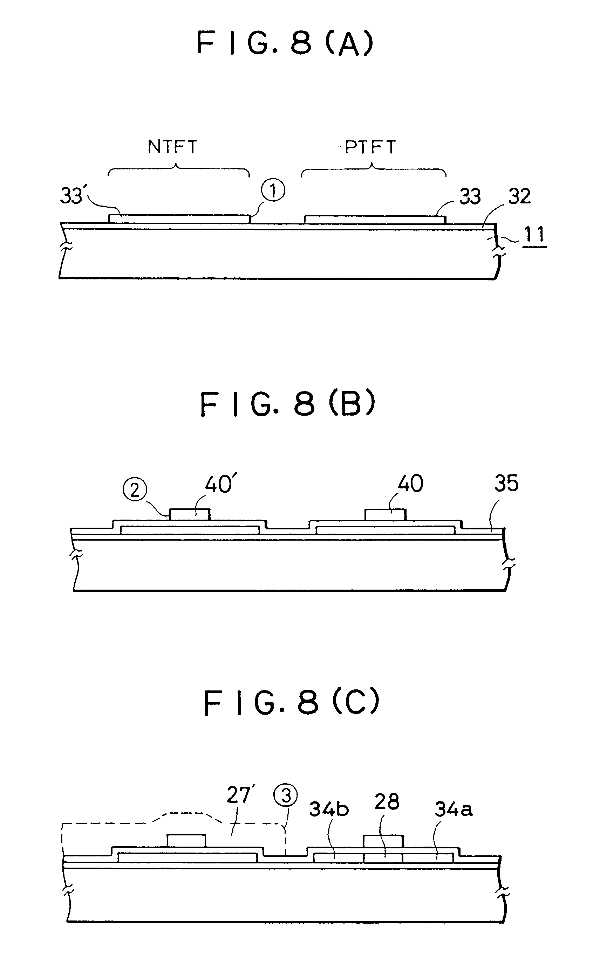

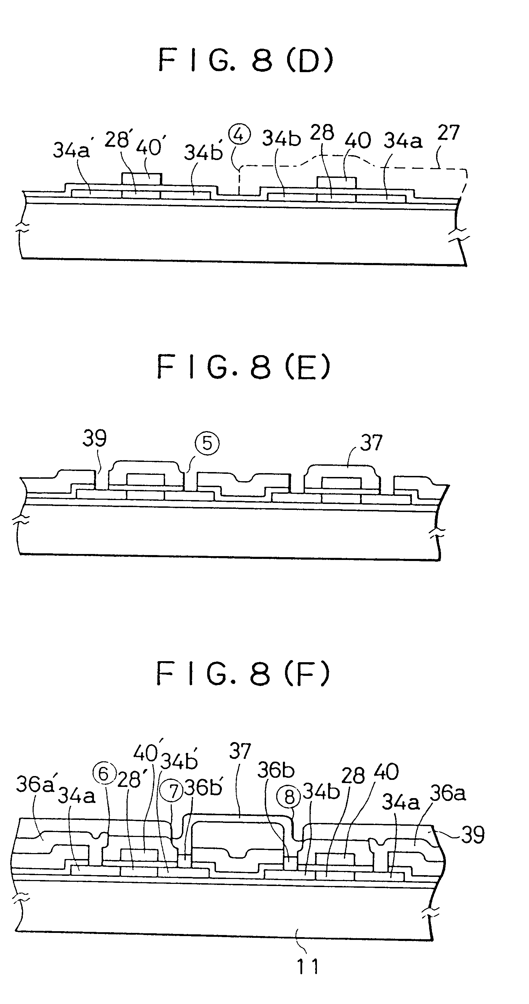

Referring now to Figs. 8(A) to 8(F) together with Fig. 6 and Figs. 7(A) and 7(B), a method of manufacturing thin-film field effect transistors 41 and 51 in accordance with the first preferred embodiment of the invention will now be described in detail. This exemplary method is carried out with a multi-chamber apparatus suitable for mass-production. However, the method is applicable to similar processes utilizing separate chambers without substantial modification. Ten sheets of glass substrate are mounted on a cassette and placed in the loading and unloading chamber 1 through the gate valve 5. The substrates may be made from an inexpensive glass which can endure thermal treatment at high temperatures up to 700°C, e.g. 600°C, such as NO glass manufactured by Nippon Electric Glass Co. Ltd., LE-30 glass manufactured by Hoya Co. or VYCOR glass manufactured by Corning Corp. After adjusting the inner conditions of the loading and unloading chamber 1 and the subsidiary chamber 2 to be equivalent, the cassette is transported from the loading and unloading chamber 1 into the subsidiary chamber 2 through the valve 6. One of the glass substrates is positioned in the first magnetron RF sputtering apparatus as shown in Fig. 7(A) by means of a transportation mechanism (not shown) and coated with a $Si0_2$ film 32 as a blocking film to a thickness of 1000Å to 3000Å. The conditions under which this deposition is carried out are given as: an atmosphere of 100% oxygen; a total atmospheric pressure of 0.5 Pa; a substrate temperature of 150°C; and a power output of 400W to 800W from the 13.56 MHz RF apparatus. The target is composed of a single crystalline silicon or a quartz block and the deposition speed is 30 to 100 Å/min. The coated substrate is then exchanged for one of the remaining substrates and this is subsequently coated with a $Si0_2$ film in the same manner. This process is repeated until all the substrates mounted on the cassette are coated with a $Si0_2$ film. During this procedure, the transportation of a substrate between the subsidiary chamber 2 and the sputtering apparatus 3 has to be carried out after adjusting the pressures and the inner atmospheres of the chambers 2 and 3 to be equivalent, so as to eliminate undesirable impurities.

An amorphous silicon film 33 is next deposited in the second sputtering apparatus 4 on the $Si0_2$ film 32 to a thickness from 500 nm to 1 μm, e.g. 2000Å. The total density of oxygen, carbon and nitrogen in the amorphous film is preferably between $4 \times 10^{19}$ and $5 \times 10^{21} cm^{-3}$ in order to eliminate the undesirable influence of incident light on the channel region of the transistor by reducing its photosensitivity. The photosensitivity of the channel can alternatively be reduced by introducing a spoiling impurity selectively into the channel. In this case, it is desirable that the total density of oxygen, carbon and nitrogen in the amorphous film does not exceed $7 \times 10^{20} cm^{-3}$, and preferably that it does not exceed $1 \times 10^{19} cm^{-3}$. Such a low density makes it easy to recrystallize the source and the drain to be formed in the silicon film in a later step by thermal treatment. For the formation of the silicon film 33, the ten substrates are placed into the second sputtering apparatus 4 one after another from the subsidiary chamber 2 in the same manner as described previously and an amorphous silicon film is deposited on each substrate. The transportation of each substrate between the second sputtering apparatus 4 and the subsidiary chamber 2 is carried out after adjusting the pressures and the inner atmospheres of the chambers 2 and 4 in order to eliminate undesirable impurities. This procedure is generally employed when it is desired to transport the substrates between any two adjacent chambers, even if not particularly described hereinbelow. The atmosphere in the second sputtering apparatus 4 comprises a mixture consisting of hydrogen and argon so that the partial pressure of hydrogen is given as $H_2/(H_2+Ar)$ = 0.8 (0.2 to 0.8 in general). The hydrogen and argon gases desirably have purities of 99.999% and 99.99% respectively and are introduced after the inside of the second sputtering apparatus 4 is evacuated to a pressure not higher than $1 \times 10^{-5}$ Pa. The deposition is carried out under a total atmospheric pressure of 0.5 Pa with the output power of the 13.56 MHz RF apparatus at 400W to 800W using a target composed of single crystalline silicon desirably containing oxygen atoms at a concentration of no greater than 5 x $10^{8}$cm$^{-3}$ (typically 1 x $10^{8}$cm$^{-3}$) and with the substrate temperature (deposition temperature) maintained at 150°C by use of the heater 16a. In the preferred embodiments, the hydrogen proportion in the mixture may be chosen to be between 5% and 100%, the deposition temperature between 50°C and 500°C (typically 150°C) and the output power of the RF apparatus between 1W and 10MW in a frequency range from 500Hz to 100GHz which in addition may be combined with another pulsed energy source.

Alternatively, the amorphous silicon film 33 may be deposited by low-pressure CVD (LPCVD) or plasma CVD. In the case of LPCVD, the deposition is carried out by introducing disilane ($Si_2H_6$) or trisilane ($Si_3H_8$) in a suitable CVD chamber. The deposition temperature is selected to be 100°C to 200°C lower than the recrystallization temperature of the silicon, i.e. 450°C to 550°C, for example 530°C. The deposition speed is 50 to 200Å/min. Boron may be introduced at a density of 1 x $10^{15}$cm$^{-3}$ to 1 x $10^{18}$cm$^{-3}$ into the film by using diborane as a dopant gas together with the silane in order to make the threshold voltages of N-type and P-type TFTs even. In the case of plasma CVD, the deposition is carried out by introducing monosilane ($SiH_4$) or disilane ($Si_2H_6$) at 300°C in a suitable plasma CVD chamber. The input energy is for example high-frequency electric energy at 13.56MHz.

The oxygen density of the semiconductor film is preferably no higher than 5 x $10^{21}$cm$^{-3}$ because if the oxygen density is too high, thermal treatment has to be carried out at a high temperature for a long period of time in order to sufficiently recrystallize the semiconductor film in a later step. The oxygen density, however, must not be too low because leakage current in the off condition of the TFT increases in response to a back light which may be provided in the liquid crystal display if a particular spoiling impurity is not used. For this reason, the oxygen density is selected between 4 x $10^{19}$ and 4 x $10^{21}$cm$^{-3}$. It was confirmed by SIMS (secondary ion mass spectroscopy analysis) that a hydrogen impurity was present in this structure at a density of 4 x $10^{20}$cm$^{-3}$ which is equivalent to one atom % assuming the density of silicon to be 4 x $10^{22}$cm$^{-3}$. This density figure was a minimum value for hydrogen which varied along the depth direction. The reason why such a minimum value was used is because a natural oxide existed at the surface of the semiconductor film. If it is desired to dope the channel region, oxygen may be introduced as a spoiling agent to the portion of the semiconductor film which forms the channel region to a density of 5 x $10^{19}$ to 5 x $10^{21}$cm$^{-3}$ after the deposition of the semiconductor film. In this case, the deposition of the semiconductor film can be carried out in order that the total density of oxygen in the semiconductor film does not exceed 7 x $10^{20}$cm$^{-3}$, preferably that it does not exceed 1 x $10^{19}$cm$^{-3}$. Such a low density makes it easy to recrystallize the source and drain regions of the semiconductor film in a later step by thermal treatment. In this case, when TFTs for the peripheral circuits which are located so as not to be exposed to any illumination are formed at the same time, the mobility of these TFTs can be increased, because the introduction of oxygen is prevented, resulting in a high speed of operation.

After all the substrates are coated with the silicon oxide and amorphous silicon semiconductor films, thermal treatment is given thereto in the subsidiary chamber 2 by means of the heater 10c at an operating temperature in the range 450°C to 700°C (typically 600°C) for a period of 12 to 70 hours using a non-oxidizing atmosphere, e.g. hydrogen. The film is recrystallized by this thermal annealing and forms a semi-amorphous or a semi-crystalline structure.

Next, the mechanism for the formation of semi-amorphous or semi-crystalline semiconductor material in accordance with the present invention will be explained. When sputtering a single crystalline silicon target in a mixture of hydrogen and argon, high-energy heavy argon atoms collide with the surface of the target and dislodged therefrom clusters each containing several tens to several hundreds of thousands of silicon atoms, which are finally deposited on the substrate to be coated. These clusters pass through the mixture of gases in advance of the deposition on the substrate and react with hydrogen atoms at their external surfaces in order to terminate open-ended or dangling bonds. Accordingly, when deposited on the substrate, the clusters comprise internal amorphous silicon and external ordered silicon including Si-H bonds. The Si-H bonds react with other Si-H bonds and are converted to Si-Si bonds by thermal treatment in the temperature range 450°C to 700°C in a non-oxidizing atmosphere. This coupling of adjacent silicon atoms (Si-Si) functions to let adjacent clusters be attracted to each other, whereas without thermal treatment these clusters have a tendency to convert their states to more ordered states (partial recrystallization). As a result of adjacent combinations, the crystalline structure of these clusters is given lattice distortion and the peak of its Raman spectra (522cm$^{-1}$ : the peak of single crystalline silicon) is displaced in the low-frequency direction. The apparent grain diameter calculated on the basis of half-width is in the range 50Å to 500Å which seems to indicate the existence of microcrystals.

The energy bands of the clusters are connected through the Si-Si bonds thereby anchoring the clusters at the interfaces therebetween. For this reason, the polycrystalline (semi-amorphous or semi-crystalline) structure of silicon in accordance with the present invention, is entirely different than usual polycrystals in which grain boundaries provide barriers against carrier transportation, so that the carrier mobility of the polycrystalline silicon can be of the order of 15 to 300 $cm^2/Vsec$ (electron mobility) and 10 to 200 $cm^2/Vsec$ (hole mobility). Therefore, the semi-amorphous or semi-crystalline structure in accordance with the present invention can be considered substantially not to include undesirable grain boundaries. However, if the semiconductor is subjected to high temperatures of 1000°C or higher rather than the relatively low temperatures of 450°C to 700°C, latent oxygen atoms come to appear at the boundaries between the clusters and form barriers as in some of the prior art techniques. The carrier mobility can be improved by increasing the strength of the anchoring between the clusters. For this purpose, the oxygen density in the semiconductor film may be decreased to $7 \times 10^{19} cm^{-3}$, desirably to $1 \times 10^{19} cm^{-3}$.

The amorphous silicon semiconductor film 33 is patterned by means of a photomask as indicated by ① in Fig. 8(A) to leave areas 33 and 33′ which are necessary to form N-channel and P-channel transistors. After all the substrates are coated with the silicon oxide and the amorphous silicon semiconductor film and patterned as described above, the substrates are placed again in the first sputtering apparatus 3. The entire structure is then coated with a silicon oxide film 35 of a thickness of 500Å to 1000Å, e.g. 1000Å, by sputtering in an oxide atmosphere as illustrated in Fig. 8(B). The deposition condition is the same as that for the silicon oxide film 32 as explained above. The characteristics at the interface between the silicon oxide film 35 and the underlying semiconductor film 33 can be improved by applying ultraviolet radiation to implement ozone oxidation. Namely, the boundary levels can be decreased by utilizing photo-CVD in combination with the sputtering explained in the description of deposition of the oxide film 32. Alternatively, fluorine may be introduced in this deposition in order to fix sodium ions. In this case, the atmosphere comprises a high density of oxygen (95%) including $NF_3$ (5%) at a total atmospheric pressure of 0.5 Pa, the output power of the 13.56 MHz RF apparatus is 400W, a target composed of a single crystalline silicon or an artificial quartz is used and the substrate temperature is maintained at 100°C. By this procedure, the silicon oxide film 35 for the gate insulating film includes fluorine atoms which function to terminate open ended or dangling bonds of silicon atoms so that the formation of fixed charge can be prevented at the interface between the semiconductor films 33 and 33′ and the oxide film 35. A silicon semiconductor film of 0.2 μm thickness which is highly doped with phosphorus at a density of $1 \times 10^{21}$ to $5 \times 10^{21} cm^{-3}$ is deposited by low-pressure CVD on the silicon oxide film 35 and this is followed, if desired, by the coating of a single conductive film of 0.3 μm thickness made of molybdenum or tungsten or a multiple conductive film comprising the single conductive film previously described and a $MoSi0_2$ or $WSi0_2$ film. The semiconductor film coated with the single or multiple conductive film is then patterned by photolithography with a suitable mask as shown in Fig. 8(B) at ② in order to form gate electrodes 40 and 40′.

A photoresist film 27′ is formed by the use of a photomask as shown in Fig. 8(C) at ③ in order to cover the semiconductor film 33′. Using the gate electrode 40 and the photomask ③, self-aligned impurity regions, i.e. a source and a drain region 34a and 34b, are formed by ion implantation of boron at a density of $1 \times 10^{15} cm^{-2}$ to $5 \times 10^{15} cm^{-2}$. The resultant intermediate region 28 of the silicon semiconductor film 33 between the impurity regions 34a and 34b is then defined as a channel region as illustrated in Fig. 8(C). After removing the photoresist film 27′, another photoresist film 27 is formed by the use of a photomask ④ in order to cover the semiconductor film 33. Using the gate electrode 40′ and the photomask ④, self-aligned impurity regions, i.e. a source and a drain region 34a′ and 34b′ are formed by ion implantation of phosphorus at a density of $1 \times 10^{15} cm^{-2}$ to $5 \times 10^{15} cm^{-2}$. The resultant intermediate region 28′ of the silicon semiconductor film 33′ between the impurity regions 34a′ and 34b′ is then defined as a channel region as illustrated in Fig. 8(D). The channel lengths of the p-channel and n-channel transistors are 10 μm respectively. The channel widths of the p-channel and n-channel transistors are 20 μm respectively. The ion implantation may instead be carried out by selectively removing the silicon oxide film 35 by the use of the gate electrode 40 or 40′ as a mask followed by direct ion implantation of boron or phosphorus.

After removing the photoresist 27, the channel regions are subsequently thermally annealed at 600° for 10 to 50 hours in an atmosphere of hydrogen to make the impurities in the drain and source regions active. An interlayer insulating film 37 of silicon oxide is deposited to a thickness of 0.2 to 0.6 μm by the same sputtering method as described above over the entire surface of the structure, followed by etching by means of a photomask ⑤ for opening contact holes 39 through the interlayer insulation film 37 and the oxide film 35 in order to provide access to the underlying source and drain regions 34a, 34b, 34a′ and 34b′. The deposition of the interlayer insulating film 37 may be carried out by LPCVD, photo-CVD or ordinal-pressure CVD (TEOS-ozone). Next, an aluminium film of 0.5 to 1 μm thickness is deposited on the structure over the contact holes 39 and is patterned to form source and drain electrodes 36a, 36b, 36a′ and 36b′ by means of a photomask ⑥ as illustrated in Fig. 8(F). An organic resin film 39 such as a transparent polyamide film is coated over the structure to provide a planar surface and patterned by means of a photomask ⑦ to provide access to the drain electrodes 36b and 36b′. This is then followed by the formation of a lead electrode 37 made of a transparent conductive material such as indium tin oxide (ITO) which is to be electrically connected with the pad 37b. The ITO film is deposited by sputtering at room temperature to a temperature of 150°C followed by annealing in an oxidizing atmosphere ($0_2$) or in air at a temperature of 200°C to 400°C. The pad 37b can be formed at the same time by the deposition of the lead electrode 37. Then, the formation of the CMOS transistors is completed.

The mobility and the threshold voltage of the p-channel TFT are 20 $cm^2/Vs$ and -5.9 V respectively. The mobility and the threshold voltage of the n-channel TFT are 40 $cm^2/Vs$ and 5.0 V respectively. The glass substrate provided with these CMOS transistors incorporating suitable conductive patterns as illustrated, is joined with a counterpart glass substrate provided with a ground electrode located throughout its entire inner surface, which is followed by the injection of a liquid crystal material between these two substrates. One of the advantages of the above process is that the formation of these transistors (spoiled and not spoiled) can be carried out at temperatures no higher than 700°C so that the process does not require the use of expensive substrates such as quartz substrates and is therefore suitable for large scale LCD production methods.

In the above embodiment, thermal annealing is carried out twice at the steps corresponding to Figs. 8(A) and 8(D). The first annealing (Fig. 8(A)), however, can be omitted to shorten the process time because of the subsequent second annealing.

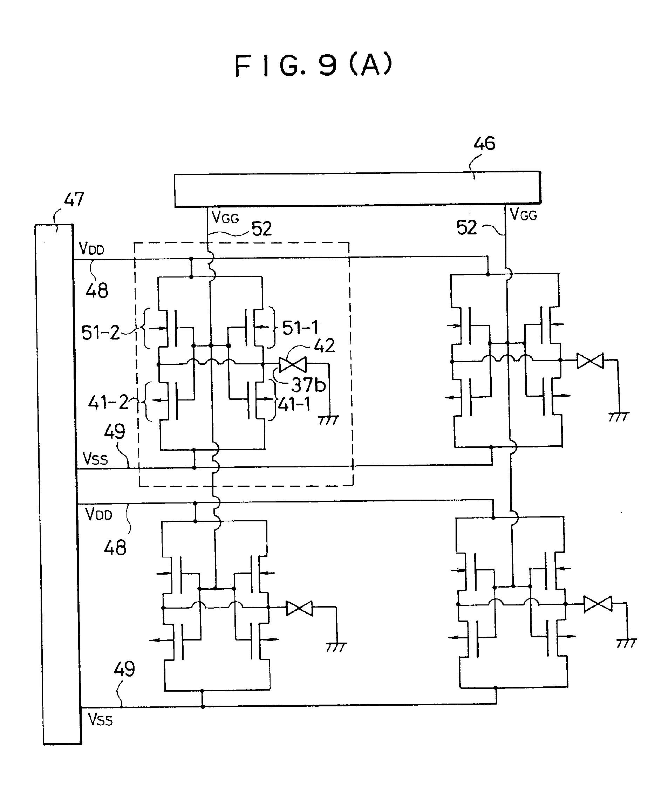

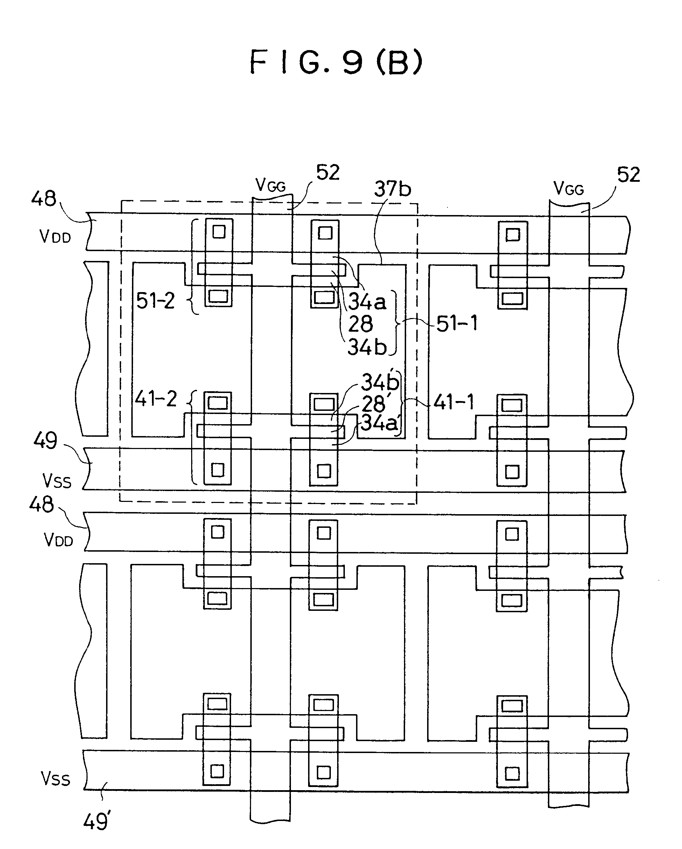

Referring to Figs. 9(A) and 9(B), CMOS thin-film field effect transistors in accordance with a second preferred embodiment of the present invention will now be described. In this embodiment, two pairs of complementary CMOS transistors 51-1 with 41-1 and 51-2 with 41-2 are connected in parallel to the conductive pad 37b for each pixel (as enclosed by the dashed line) at their drain electrodes. These CMOS transistors are manufactured using the steps explained above in conjunction with the first embodiment except for the fact that the number of transistors is doubled. Similar elements are given similar numerals as in the first embodiment. The electrode pads 37b have to be deposited on the VGG line by use of a suitable insulating film. The electrical operation is substantially the same as that of the first embodiment. Accordingly, two identical individual switching elements are prepared corresponding to one pixel so that if the operation of one of them is at fault, the operation of the information display can be maintained by eradicating the faulty element by use of laser radiation without affecting the remaining CMOS transistors. For this reason, the conductive transparent pads are formed so as not to cover these TFTs.

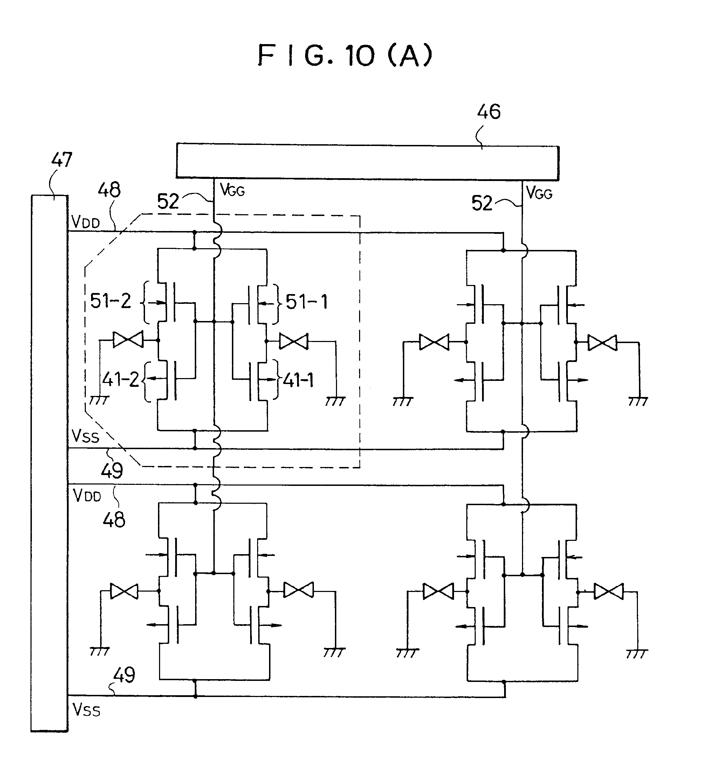

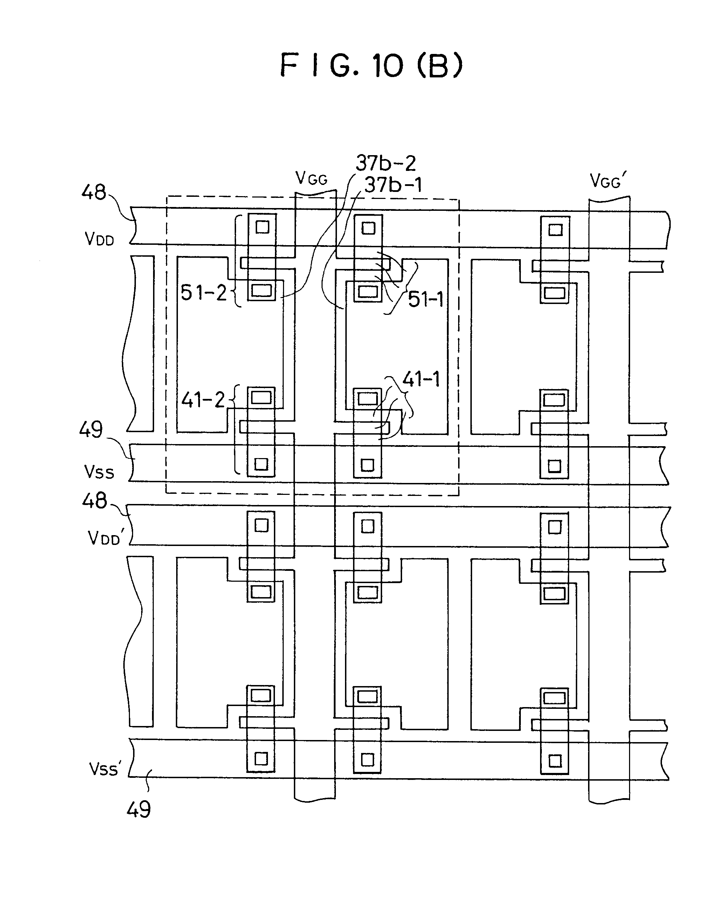

Referring to Figs. 10(A) and 10(B), CMOS thin-film field effect transistors in accordance with a third preferred embodiment of the present invention will now be described. Also in this embodiment, two pairs of complementary CMOS transistors 51-1 with 41-1 and 51-2 with 41-2 are connected in parallel to an electrode pad 37b for each pixel at their drain electrodes. The electrode pad 37b, however, is separated into two portions 37b-1 and 37b-2 each independently connected to a corresponding one of the two CMOS transistors. These CMOS transistors are manufactured using the steps explained above in conjunction with the first embodiment except for the fact that the number of transistors is doubled. Similar elements are given similar numerals as in the first embodiment. Then, each pixel comprises two individual sub-pixels. In accordance with this embodiment, even if the operation of one of the sub-pixels is faulty, the other sub-pixel can support the operation of the pixel and therefore the deterioration of grey scales is substantially decreased.

As described above, there are the following advantages in accordance with the above embodiments of the present invention:

1) Definite threshold voltages are established;

2) The switching speeds are increased;

3) Margins for operational fluctuation are broadened;

4) Even if some TFTs are faulty, the operation of the embodiment is not prejudiced;

5) The increase of the number of photomasks used due to the employment of complementary transistors is limited to only two (photomask ③ and ④) as compared with conventional cases utilizing only n-channel TFTs; and

6) Since semi-amorphous or semi-crystalline semiconductors are used in place of amorphous semiconductors and the carrier mobility is increased by a factor of ten or more, the size of the TFT is substantially reduced so that only a slight decrease of the aperture ratio is necessary even when two TFTs are formed in one pixel.

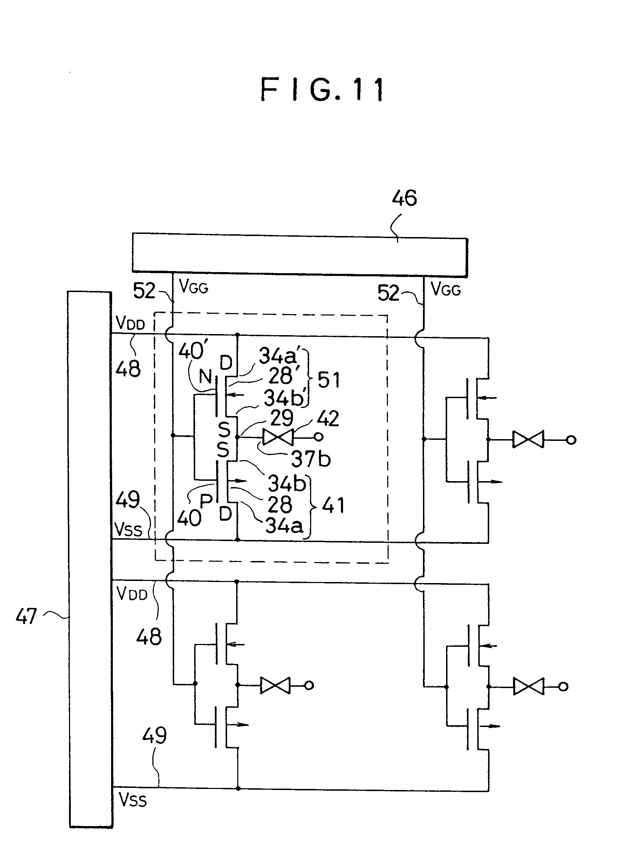

Fig. 11 is a diagram illustrating the equivalent circuit of a liquid crystal display in accordance with a fourth embodiment of the present invention. The pixel configuration as shown in Fig. 4 can be applied also for this embodiment. The diagram shows only a 2 x 2 matrix for convenience of description whereas ordinary liquid crystal displays consist of much greater numbers of pixels such as a 640 x 480 matrix or a 1260 x 960 matrix. The liquid crystal display includes a liquid crystal layer 42 disposed between a pair of glass substrates 11 and 11′ in the same manner as the first embodiment as shown in Fig. 2. The entirety of the inner surface of the glass substrate 11′ is coated with a back electrode 53. In this embodiment, however, the electrode 53 is not grounded but rather is supplied with an offset voltage in accordance with the driving mechanism of the liquid crystal display as explained in detail infra. The inner surface of the other substrate 11 is provided with a plurality of conductive pads 37b each constituting one pixel of the display in the same manner as the first embodiment. Each conductive pad 37b is formed on the substrate together with two CMOS transistors, namely an n-type FET 41 and a n-type FET 51, whose drains 34b′ and 34b respectively are electrically connected with the corresponding pad 37b. The sources of all the p-type CMOS FETs on the same row are connected with a VDD line 48 of the row. The sources of all the N-type CMOS FETs on the same row are connected with a VSS line 49 of the row. The gates of all the P-type and N-type CMOS FETs on the same column are connected with a VGG line of the column. The VSS and VDD lines are connected to a row driver 47 and supplied with control signals therefrom. The VGG lines 52 are connected to a column driver 46 and supplied with control signals therefrom.

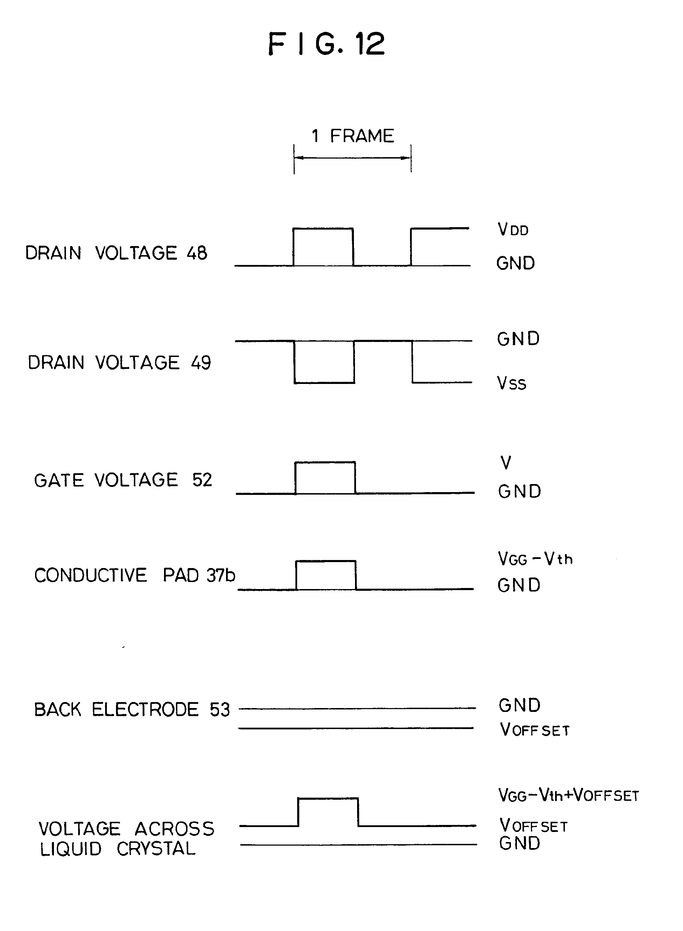

Fig. 12 illustrates the operational action of each pixel in response to several control signals applied to the VDD line, the VSS line, the VGG line and the back electrode. When a positive voltage is applied to the VDD line and a negative voltage to the VSS line, the liquid crystal voltage level at the pixel (i.e. the voltage level of the pad 37b) is pulled up to the VDD level if the VGG line is at a ground voltage and the liquid crystal voltage level is pushed down to the VSS level if the VGG line is positive (e.g. the VDD level). Accordingly, the voltage applied across the liquid crystal at the pixel is calculated by subtracting the offset (bias) voltage applied to the back electrode, from the liquid crystal voltage. In the illustration, the highest voltage applied across the liquid crystal layer is only when the positive voltage (VDD) and the negative voltage (VSS) are applied respectively to the VDD line and the VSS line and the VGG line is at a ground voltage.

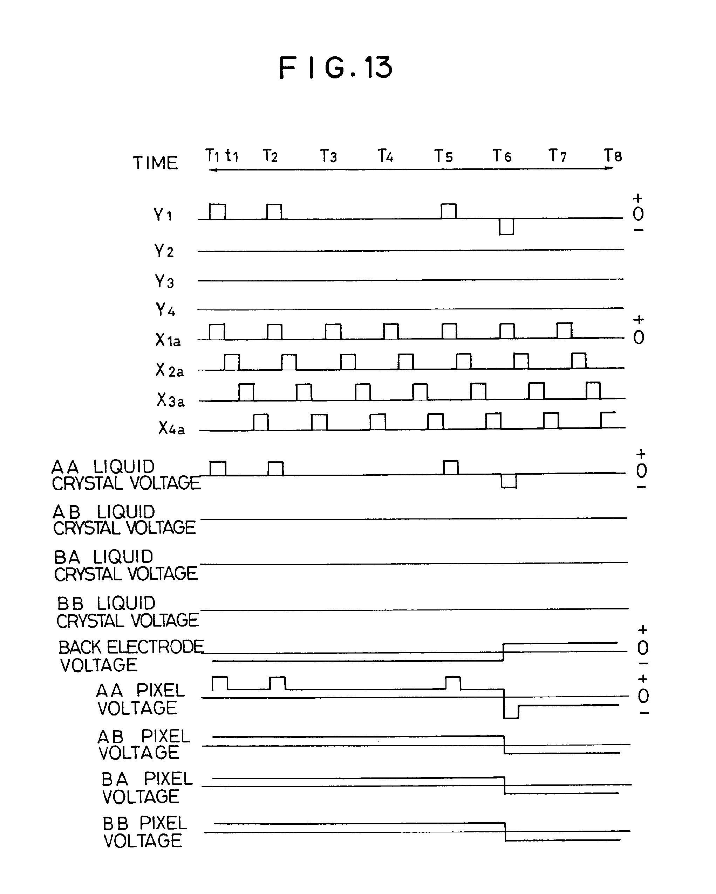

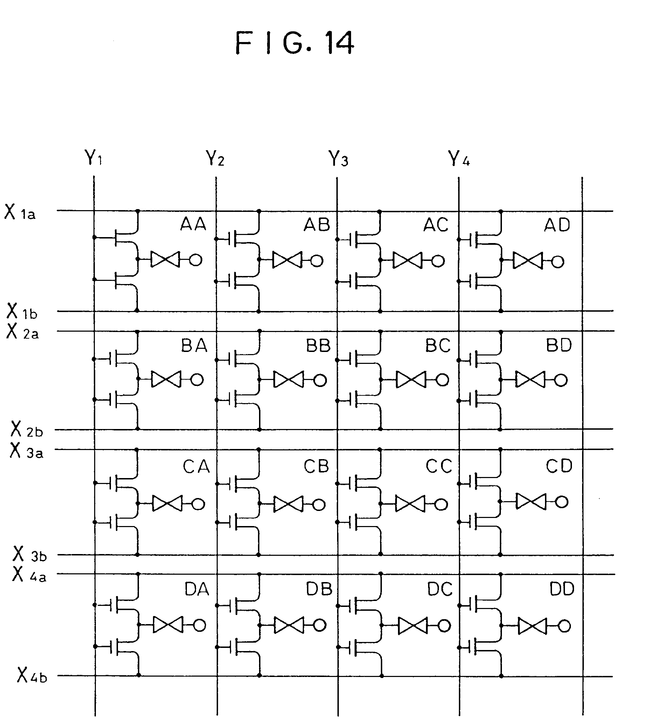

An example illustrating the driving method in accordance with the fourth embodiment of the present invention will now be explained with reference to Figs. 13 and 14. In Fig. 14, the 2 x 2 matrix of Fig. 11 is expanded to a 4 x 4 matrix. Their configurations, however, are substantially identical except for the number of pixels employed. Fig. 13 illustrates the control signals applied to the VDD lines, the VSS lines, the VGG lines and the back electrode. The VDD lines are called $X_{1a}$, $X_{2a}$, $X_{3a}$ and $X_{4a}$ from the first row to the fourth row in the diagram respectively whereas the VSS lines are called $X_{1b}$, $X_{2b}$, $X_{3b}$ and $X_{4b}$ in the same manner. The signals applied to the VSS lines are exactly the inverse of the signals applied to the VDD line as shown in Fig. 12 and therefore, the waveforms of the VSS lines are not illustrated. The VGG lines are called $Y_1$, $Y_2$, $Y_3$ and $Y_4$ from the left column to the right column respectively. In this driving method, the control signals applied to the VDD and VSS lines are addressing signals which scan from the first row to the fourth row as shown in Fig. 13. Opposed pulses are applied to the VDD and VSS lines connected to one addressed row for a time interval equivalent to one quarter of the frame interval during which all the rows are sequentially scanned. The control signals applied to the VGG lines are data signals which determine the visual pattern appearing on the display.

If the actuation of a pixel on the i-th row and the j-th column is desired, a negative pulse is applied to the VGG line of the j-th column at the time when the i-th row is addressed by applying opposed pulses to the VDD and VSS lines on the i-th row. In Fig. 13, the pixel of the first column and the first row (given symbol AA in Fig. 14) is actuated in the first quarter of the first frame interval between $T_1$ and $T_2$, the second frame interval between $T_2$ and $T_3$ and the fifth frame interval between $T_5$ and $T_6$. The back electrode is biassed by a negative voltage between $T_1$ and $T_6$. The VDD, VSS and VGG signal levels and the bias voltage are for example 20V, -20V, ±10V and ±10V respectively in the case when the optical characteristic of the liquid crystal is changed by a threshold voltage of 20V thereacross. Accordingly, as understood from Fig. 12, a high voltage such as 30V is only applied to the selected pixel (the AA pixel in the figure) while the voltage level applied to the other pixel does not exceed 10V. In the time interval $T_6$ to $T_8$ in Fig. 13, the voltage levels on the VGG lines and the back electrode are inverted so that the polarity of the applied voltage on each pixel is simply inverted. Accordingly, a low voltage such as -30V is only applied to the selected pixel (the AA pixel in the figure) while the absolute voltage level applied to the other pixel does not exceed 10V. The pixel in the first column and the first row is actuated in the sixth frame between $T_6$ and $T_7$. The inversion of polarity takes place repeatedly once per several frames to several tens of frames, so that the average voltage applied to the liquid crystal approaches zero volts throughout its operation resulting in the effective prevention of deterioration of the liquid crystal. In the case when the threshold voltage of the liquid crystal is 2.5 V, the signal levels of these VDD, VSS and VGG lines are selected respectively to be 5V, -5V and ±7V.

In accordance with this embodiment, the voltage level of control signals applied to the liquid crystal layer can be easily adjusted to the threshold level of the liquid crystal layer by simply adjusting the bias voltage level applied to the back electrode. The employment of the bias voltage makes it possible to cancel out the effect of the electric field impressed on the liquid crystal by periodically changing the polarity of the bias voltage, resulting in the prevention of electrolysis of the liquid crystal material.

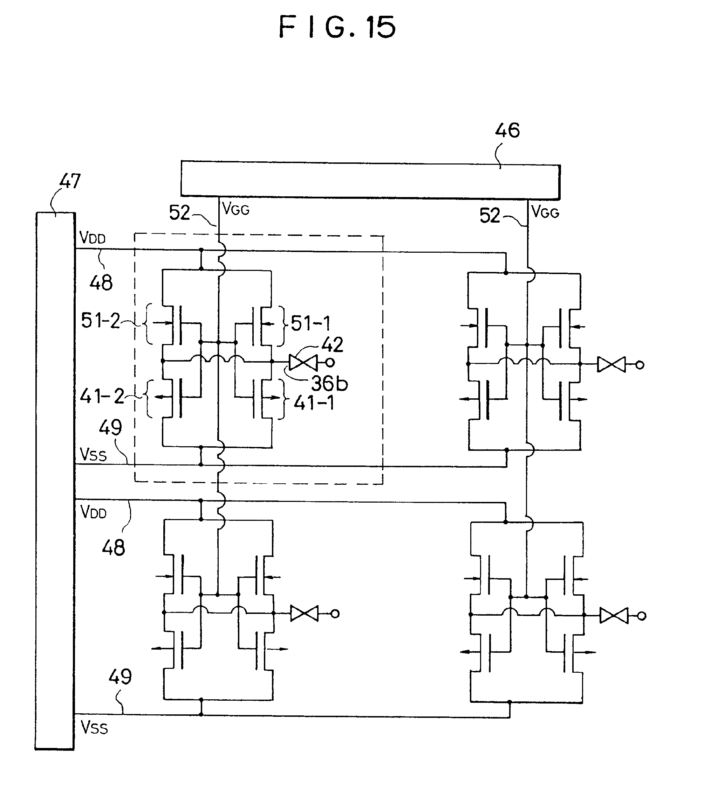

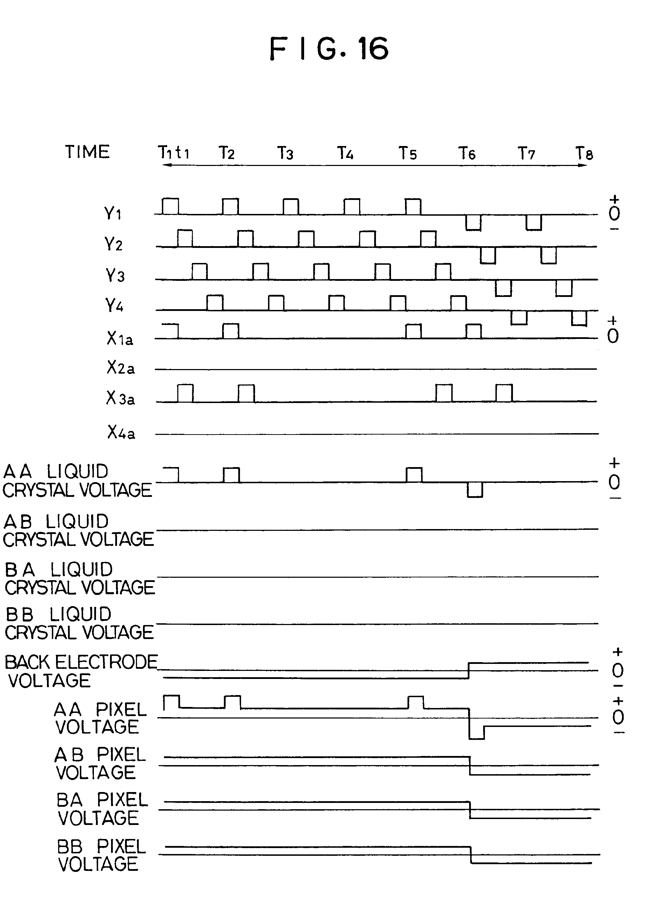

Referring to Figs 15 and 16, a liquid crystal display and a method for driving the display in accordance with a fifth preferred embodiment of the present invention will now be described. In this embodiment, two pairs of complementary CMOS transistors 41-1 with 51-1 and 41-2 with 51-2 are connected in parallel to an electrode pad 36b for each pixel (as enclosed by the dashed line) at their drain electrodes. These CMOS transistors are manufactured using the steps explained above in conjunction with the first embodiment except for the fact that the number of transistors is doubled. Similar elements are given similar numerals as in the first embodiment. The electrical operation is substantially the same as that of the third embodiment. Accordingly, two identical individual switching elements are prepared corresponding to one pixel so that when the operation of one of them is faulty, the operation of the information display can be maintained by eradicating the faulty element by laser radiation without prejudice to the operation of the remaining CMOS transistors. For this reason, the conductive transparent pads are formed so as not to cover these TFTs.

An example illustrating the driving method in accordance with the fifth embodiment of the present invention will now be explained with reference to Fig. 16. In Fig. 16, explanation is given for the operation of the display as shown in Fig. 15 but expanded in a 4 x 4 matrix. The configuration, however, is substantially identical except for the number of pixels employed. Fig. 16 illustrates the control signals applied to the VDD lines, the VSS lines, the VGG lines and the back electrode in the same manner as the second embodiment. In this driving method, the control signals applied to the VGG lines are addressing signals which repeatedly scan from the first row to the fourth row as shown in Fig. 16. A negative pulse is applied to the VGG line connected to an addressed column. The opposed control signals applied to the VDD and VSS lines are data signals which determine the visual pattern appearing on the display.

If the actuation of a pixel on the i-th row and the j-th column is desired, opposed pulses are applied to the VDD and VSS lines of the i-th row at the time when the j-th column is addressed by applying a negative pulse to the VGG line on the j-th column. In Fig. 16, the pixel on the first column and the first row is actuated in the first frame interval between $T_1$ and $T_2$, the second frame interval between $T_2$ and $T_3$ and the fifth frame interval between $T_5$ and $T_6$. The back electrode is biassed by a negative voltage between $T_1$ and $T_6$. The VDD, VSS and VGG signal levels and the bias voltage are for example 20V -20V, ±10V and ±10V respectively in the case when the optical characteristic of the liquid crystal is changed by a threshold voltage of 20V. Accordingly, as understood from Fig. 12, a high voltage such as 30V is only applied to the selected pixel while the voltage level applied to the other pixel does not exceed 10V. In the time interval $T_6$ to $T_8$ in Fig. 16, the voltage levels on the VGG lines and the back electrode are inverted so that the polarity of the applied voltage on each pixel is simply inverted. Accordingly, a low voltage such as -30V is only applied to the selected pixel while the absolute voltage level applied to the other pixel does not exceed 10V. The pixel in the first column and the first row is actuated in the sixth frame between $T_6$ and $T_7$. The inversion of polarity takes place repeatedly once per several frames to several tens of frames so that the average voltage applied to the liquid crystal approaches zero volts throughout its operation resulting in the effective prevention of deterioration of the liquid crystal. In the case when the threshold voltage of the liquid crystal is 2.5 V, the signal levels of these VDD, VSS and VGG lines are selected respectively to be 5V, -5V and ±7V.

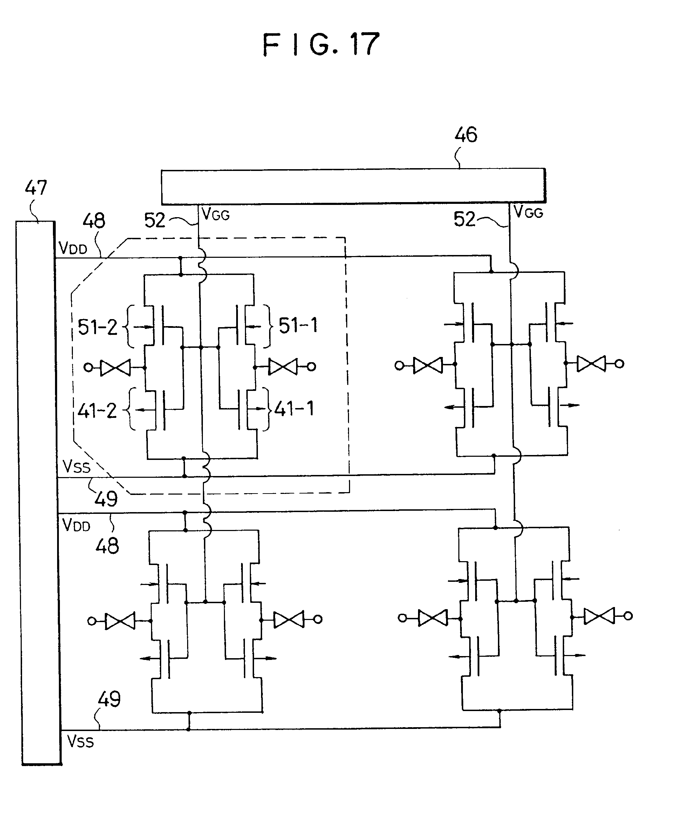

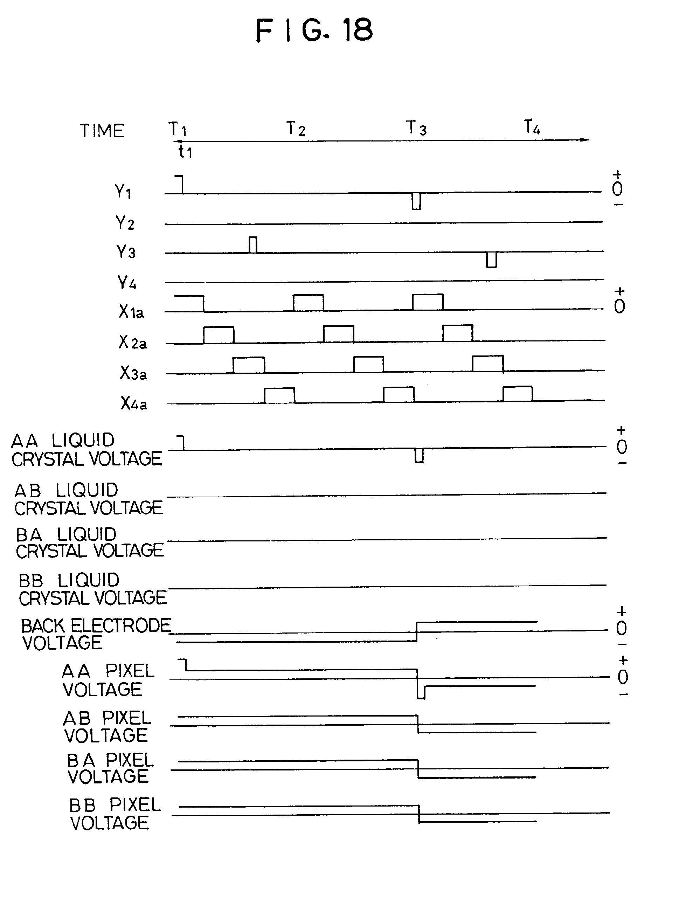

Referring to Figs. 17 and 18, a sixth preferred embodiment of the present invention will now be illustrated. Also in this embodiment, two pairs of complementary CMOS transistors 41-1 with 51-1 and 41-2 with 51-2 are connected in parallel to an electrode pad 37b for each pixel at their drain electrodes. The electrode pad 37b, however, is separated into two portions 37b-1 and 37b-2 each independently connected to a corresponding one of the two CMOS transistors in the same manner as Fig. 10(B). These CMOS transistors are manufactured using the steps explained above in conjunction with the first embodiment except for the fact that the number of transistors is increased. Similar elements are given similar numerals as in the first embodiment. Then, each pixel comprises two individual sub-pixels. In accordance with this embodiment, even if the operation of one of the sub-pixels is faulty, the other sub-pixel can support the operation of the pixel and therefore the possibility of deterioration in grey scale is substantially decreased. Also, even when the operational speed of one sub-pixel becomes low, the quality of the displayed image is not greatly deteriorated.

An example illustrating the driving method in accordance with the sixth embodiment of the present invention will now be explained with reference to Fig 18. In Fig. 18, explanation is given for the operation of the display as shown in Fig. 17 but expanded in a 4 x 4 matrix. The configuration, however, is substantially identical except for the number of pixels employed. Fig. 18 illustrates the control signals applied to the VDD lines, the VSS lines, the VGG lines and the back electrode in the same manner as the fourth embodiment. In this driving method, the control signals applied to the VDD and VSS lines are addressing signals which scan from the first row to the fourth row as shown in Fig. 18. Opposed pulses are applied to the VDD and VSS lines connected to an addressed row. The control signals applied to the VGG lines are data signals which determine the visual pattern appearing on the display. In this embodiment, however, control signals applied to the VGG lines are negative pulses whose pulse width is only one 16th of one frame interval (e.g. between $T_1$ and $T_2$). The pulse width of addressing signals applied to the VDD and VSS lines is on the other hand, one quarter of the frame interval in the same manner as the second embodiment.

If the actuation of a pixel on the i-th row and the j-th column is desired, a negative pulse is applied to the VGG line of the j-th column at the time when the i-th row is addressed by applying opposed pulses to the VDD and VSS lines on the i-th row. In Fig. 18, the pixel on the first column and the first row is actuated in the first frame interval between $T_1$ and $T_2$. The back electrode is biassed by a negative voltage betweetn $T_1$ and $T_3$. The VDD, VSS and VGG signal levels and the bias voltage are for example 20V, -20V, ±10V and ±10V respectively in the case when the optical characteristic of the liquid crystal is changed by a threshold voltage of 20V in the same manner as previously stated. Accordingly, as understood from Fig. 18, a high voltage such as 30V is only applied to the selected pixel while the voltage level applied to the other pixel does not exceed 10V. In the time interval $T_3$ to $T_4$ in Fig. 18, the voltage levels on the VGG lines and the back electrode are inverted so that the polarity of the applied voltage on each pixel is simply inverted. Accordingly, a low voltage such as -30V is only applied to the selected pixel while the absolute voltage level applied to the other pixel does not exceed 10V. The pixel in the first column and the first row is actuated in the third frame between $T_3$ and $T_4$. The inversion of polarity takes place repeatedly once per several frames to several tens of frames so that the average voltage applied to the liquid crystal approaches zero volts throughout its operation resulting in the effective prevention of deterioration of the liquid crystal. In the case when the threshold voltage of the liquid crystal is 2.5 V, the signal levels of these VDD, VSS and VGG lines are selected respectively to be 5V, -5V and ±7V.

The foregoing description of preferred embodiments has been presented for purposes of illustration and description. It is not intended to be exhaustive or to limit the invention to the precise form described, and obviously many modifications and variations are possible without departure from the scope of the invention.

In the LCDs as illustrated above, P-type TFTs are connected to the VDD line while N-type TFTs are connected to the VSS line. However, these connections can be interchanged. Namely, N-type TFTs can be connected to the VDD line while P-type TFTs can be connected to the VSS line. For this purpose, the locations of the N-type TFTs and the P-type TFTs would be exchanged in the above embodiments. In this case, the voltage of the liquid crystal layer (the voltage of the pad) at the respective pixel would become the same level as VGG rather than VSS when the pixel is selected by the column driver 46.

The above embodiments are applications using CMOS technology for switching devices in liquid crystal displays. The TFT in accordance with the present invention, however, can be utilized in the form of a switching device comprising one TFT for driving one pixel. In this case, the equivalent circuit would be substantially the same as that illustrated in Fig. 1 except that the resistance RSD would not be effective because the N-type TFT is constructed with a doped semiconductor film which is not sensitive to incident light as explained above. The electrode pad of each pixel becomes electrically floating when not addressed in this modification so that the voltage level thereof may not always be fixed as compared with those utilizing CMOS technology. The manufacturing process thereof, however, is very simple without the need of light blocking means.

The liquid crystal material used in the liquid crystal display may include other types of materials. For example, a suitable phase transition liquid crystal material can be prepared by adding an ion dopant into a nematic liquid crystal material of guest-host type or dielectric anisotropic type. The phase transition liquid crystal material changes its optical appearance from a transparent state to a cloudy state and vice versa through a phase transition between its nematic phase and its cholesteric phase in accordance with application of an electric field. Furthermore, in place of liquid crystals, suitable light influencing materials may also be utilized for the same purpose such as electrophoresis dispersions which are prepared by dispersing pigment particles in an organic liquid which has been coloured by a dye. If a grey scale is desired, a plurality of frame intervals are given to one image to be displayed and the selected pixels are actuated in fewer frame intervals than given in accordance with the desired grey tone.

The present invention can be applied to displays utilizing other types of semiconductor devices such as germanium or silicon/germanium ($Si_xGe_{1-x}$) semiconductor devices, in which case the thermal treatment can be done at temperatures approximately 100°C lower than those used for silicon semiconductors in the above embodiments. The deposition of such a semiconductor can be carried out by sputtering in a high-energy hydrogen plasma caused by optical energy (shorter than 1000 nm wavelength) or by electron cyclotron resonance (ECR). Instead of gases including hydrogen molecules, some hydrogen compounds can be used as the atmosphere for sputtering as long as they do not introduce additional impurities. For example, monosilane or disilane may be used for forming silicon semiconductor transistors. Although in the preferred embodiment oxide and semiconductor films are deposited respectively in separate apparatuses, it is also possible to deposit other types of gate insulating films or gate electrodes in a common apparatus. During deposition of oxide films, a halogen such as fluorine may be used as a sputtering atmosphere so as to introduce halogen atoms into the oxide films in order to effectively prevent alkali metal atoms from getting into the film from the glass substrate by virtue of neutralization. The same effect can be expected by the introduction of phosphorus in place of a halogen.

The present invention can be applied to other types of optical devices utilizing semiconductor devices such as image sensors, load elements or three-dimensional elements of monolithic integrated semiconductor devices. In the preferred embodiments field effect transistors are formed on a glass substrate. However, other substrates can be used instead. For example, thin-film field effect transistors may be formed on a silicon substrate in a liquid crystal display or an image sensor device. This silicon substrate may be an intrinsic silicon substrate. a p-type silicon substrate, an n-type silicon substrate, or a silicon substrate in which MOSFET's, bipolar transistors, or the like are provided in integrated circuit form. An insulating layer is provided between such a substrate and the thin-film field effect transistors although such an insulating layer may be dispensed with in the case of an intrinsic silicon substrate.

A gate electrode may be either a single layer electrode or a multi-layer electrode in a gate insulated field effect transistor in accordance with the present invention. The single layer gate electrode may be a silicon electrode doped with phosphorus or an aluminium electrode. The multi-layer gate electrode may be a two-layer electrode which consists of a lower chromium layer and an upper aluminium layer formed thereon or a two-layer electrode which consists of a lower silicon layer doped with phosphorus and an upper metallic or metal silicide layer formed thereon. The aluminium single layer electrode and the upper aluminium layer can be formed by sputtering an aluminium target. The silicon single layer electrode and the lower silicon layer can be formed by low-pressure CVD or by sputtering a silicon target doped with phosphorus. The lower chromium layer can be formed by sputtering a chromium target. The metallic layer may be a molybdenum layer formed by sputtering a molybdenum target, a wolfram layer formed by sputtering a wolfram target, a titanium layer formed by sputtering a titanium target, or an aluminium layer formed by sputtering an aluminium target. The metal silicide layer may be a $MoSi_2$ layer formed by sputtering a $MoSi_2$ target, a $WSi_2$ layer formed by sputtering a $WSi_2$ target, or a $TiSi_2$ layer formed by sputtering a $TiSi_2$ target. Although the production methods described infra include several steps, the order of these steps can be changed.

## Claims

**1.** An electro-optical device comprising:

a pair of substrates;

a light influencing layer disposed between said substrates;

a plurality of pixels defined by conductive pads formed on an inside surface of at least one of said substrates and provided with associated switching elements; and

a driving circuit for supplying control signals to said conductive pads through said switching elements;

wherein said switching elements comprise complementary transistors.

**2.** An electro-optical device as claimed in claim 1 wherein said complementary transistors each comprise a p-channel thin-film field effect transistor and an n-channel thin-film field effect transistor which are connected together at their drain terminals.

**3.** An electro-optical device as claimed in claim 2 wherein said complementary transistors are connected between a first control line and a second control line supplied with a first control signal and a second control signal of different voltage level.

**4.** An electro-optical device as claimed in claim 2 wherein the gate terminals of said n-channel field effect transistor and said p-channel field effect transistor are connected to a third control line.

**5.** An electro-optical device as claimed in any preceding claim wherein said pixels are arranged in a matrix array.

**6.** An electro-optical device as claimed in any preceding claim wherein the photosensitivity of the channel regions of said complementary transistors is spoiled by virtue of being doped with an impurity.

**7.** An electro-optical device as claimed in claim 6 wherein said spoiling impurity comprises oxygen, carbon, or nitrogen.

**8.** An electro-optical device as claimed in any preceding claim wherein said complementary transistors comprise two pairs of complementary transistors for each pixel of said display.

**9.** An electro-optical device as claimed in claim 8 wherein each conductive pad comprises two individual portions which are connected with said two pairs of complementary transistors respectively.

**10.** An electro-optical device as claimed in any preceding claim wherein said light influencing layer is a liquid crystal layer.

**11.** An electro-optical device as claimed in any preceding claim wherein said electro-optical device is a display.

**12.** A method of driving an electro-optical device comprising: a light influencing layer; a plurality of electrode pads located adjacent to said layer at one side of said layer in order to define a plurality of pixels in said layer; a back electrode adjacent to said layer at the other side of said layer in order to apply to said layer at the pixels voltages between said back electrode and said electrode pads; and a control circuit for supplying control signals to said electrode pads and said back electrode, said method comprising:

applying a bias voltage to said back electrode; and

applying control signals to said electrode pads in order to apply voltages between said back electrode and said electrode pads across said layer; and

wherein the polarities of said bias voltage and said control signals are periodically inverted at the same time during operation of said electro-optical device in order that the effects of the voltages across said layer at each pixel substantially cancel out during operation of said electro-optical device.

**13.** A method as claimed in claim 12 wherein said polarities are inverted once per several frames.

**14.** A method as claimed in claim 12 or 13 wherein said electro-optical device is a display.

**15.** A method as claimed in claim 12 or 13 or 14 wherein said light influencing layer is a liquid crystal layer.

**16.** A method as claimed in claim 15 wherein said liquid crystal layer is a nematic liquid crystal layer.

**17.** A method as claimed in any of claims 12 to 16 wherein said layer is subjected to alternating voltages at all the pixels which are actuated and not actuated, the amplitude of said alternating voltages being smaller than that of the threshold voltage of said layer.

**18.** A liquid crystal device comprising:

a pair of substrates, at least one of which is transparent;

a liquid crystal layer disposed between said substrates;

a plurality of conductive pads formed on an inner surface of at least one of said substrates in order to define a plurality of pixels in said liquid crystal device; and

a control circuit for supplying control signals to said conductive pads through switching elements comprising complementary transistors.

**19.** A liquid crystal device as claimed in claim 18 wherein a pair of said complementary transistors are provided for each pixel and each pair comprises a p-channel field effect transistor and an n-channel field effect transistor connected at their drain terminals to a corresponding pad.

**20.** A liquid crystal device as claimed in claim 19 wherein said control circuit supplies first, second, and third control signals to each of said complementary transistors, said first control signal being supplied to the source terminal of said p-channel field effect transistor, said second control signal being supplied to the source terminal of said n-channel field effect transistor and said third control signal being supplied to the gate terminals of said n-channel and p-channel field effect transistors.

**21.** A liquid crystal device as claimed in any of claims 18 to 20 further comprising a back electrode forced on the inside surface of one of said substrates opposed to said conductive pads.

FIG. 1

46
47
51
45
44
RSD RLC
VLC
42

FIG. 2

54
11'
53
42
11

F I G. 3

46
52
VGG
52
VGG
VDD
48
40'
34a'
N
D
28'
51
34b'
29
42
S
S
37b
34b
41
49
28
P
D
34a
VSS
40
VDD
47
48
49
VSS

FIG. 4 (A)

FIG. 4 (C)

FIG. 4 (B)

52
37b
39
52
39
32
11
28'

# FIG. 5 (A)

VDD
0
VDD
48
40'
D
34a'
28'
34b'
S
N
51
VGG
0
52
S
37b
0
VGG-Vth
53
41
P
34a
28
D
34b
40
49
VSS
42

# FIG. 5 (B)

VDD
48
40'
D
34a'
28'
34b'
S
N
51
0
VGG
52
S
37b
VGG + Vth
53
41
P
34a
28
D
34b
40
49
VSS
42

FIG. 6

3
4
5
7
8
1
6
10c
2
10b
9
10a

FIG. 7 (A)

19
16
16a
11
18
14
17
13
13a
13b
20
19
12f
12-2
12a
15b
12e
12b
15
12-1
12c
15a
12d

FIG. 7 (B)

13b

FIG. 8 (A)

NTFT
PTFT
33'
①
33
32
11

FIG. 8 (B)

②
40'
40
35

FIG. 8 (C)

27'
③
34b
28
34a

FIG. 8 (D)

34a'
28'
40'
34b'
4
34b
28
40
34a
27

FIG. 8 (E)

39
5
37

FIG. 8 (F)

36a'
34a
6
28'
40'
34b'
7
36b'
37
36b
8
34b
28
40
34a
36a
39
11

FIG. 9 (A)

46
47
VGG
52
VGG
52
VDD
48
51-2
51-1
42
37b
41-2
41-1
49
VSS
VDD
48
49
VSS

# F I G. 9 (B)

52
VGG
37b
VGG
52
48
VDD
51-2
34a
28
34b
51-1
41-2
34b'
28'
34a'
41-1
49
VSS
48
VDD
VSS
49'

F I G. 10 (A)

46
47
48
52
VGG
52
VGG
VDD
51-2
51-1
41-2
41-1
VSS
49
VDD
48
49
VSS

# F I G. 10 (B)

37b-2
VGG
37b-1
VGG'
48
VDD
51-2
51-1
41-1
41-2
49
Vss
48
VDD'
Vss'
49

FIG. 11

46
52
VGG
52
VGG
VDD
48
40'
N
D
34a'
28'
34b'
51
29
42
S
S
37b
34b
28
41
49
40
P
D
34a
Vss
VDD
48
47
49
Vss

# F I G. 12

1 FRAME
DRAIN VOLTAGE 48
VDD
GND
DRAIN VOLTAGE 49
GND
VSS
GATE VOLTAGE 52
V
GND
CONDUCTIVE PAD 37b
VGG-Vth
GND
BACK ELECTRODE 53
GND
VOFFSET
VOLTAGE ACROSS LIQUID CRYSTAL
VGG-Vth+VOFFSET
VOFFSET
GND

# F I G. 13

TIME
T1 t1
T2
T3
T4
T5
T6
T7
T8
Y1
Y2
Y3
Y4
X1a
X2a
X3a
X4a
+
0
−
AA LIQUID CRYSTAL VOLTAGE
AB LIQUID CRYSTAL VOLTAGE
BA LIQUID CRYSTAL VOLTAGE
BB LIQUID CRYSTAL VOLTAGE
BACK ELECTRODE VOLTAGE
AA PIXEL VOLTAGE
AB PIXEL VOLTAGE
BA PIXEL VOLTAGE
BB PIXEL VOLTAGE

# FIG. 14

Y1
Y2
Y3
Y4
X1a
X1b
X2a
X2b
X3a
X3b
X4a
X4b
AA
AB
AC
AD
BA
BB
BC
BD
CA
CB
CC
CD
DA
DB
DC
DD

FIG. 15

46
47
52
VGG
52
VGG
VDD
48
51-2
51-1
42
36b
41-2
41-1
49
VSS
VDD
48
49
VSS

# FIG. 16

TIME
T1 t1
T2
T3
T4
T5
T6
T7
T8
Y1
Y2
Y3
Y4
X1a
X2a
X3a
X4a
+
0
−
AA LIQUID CRYSTAL VOLTAGE
AB LIQUID CRYSTAL VOLTAGE
BA LIQUID CRYSTAL VOLTAGE
BB LIQUID CRYSTAL VOLTAGE
BACK ELECTRODE VOLTAGE
AA PIXEL VOLTAGE
AB PIXEL VOLTAGE
BA PIXEL VOLTAGE
BB PIXEL VOLTAGE

F I G. 17

46
47
48
52
VGG
52
VGG
VDD
51-2
51-1
41-2
41-1
VSS
49
VDD
48
49
VSS

# F I G. 18

TIME
T1
T2
T3
T4
t1
Y1
Y2
Y3
Y4
X1a
X2a
X3a
X4a
+
0
−
AA LIQUID CRYSTAL VOLTAGE
AB LIQUID CRYSTAL VOLTAGE
BA LIQUID CRYSTAL VOLTAGE
BB LIQUID CRYSTAL VOLTAGE
BACK ELECTRODE VOLTAGE
AA PIXEL VOLTAGE
AB PIXEL VOLTAGE
BA PIXEL VOLTAGE
BB PIXEL VOLTAGE